Europäisches Patentamt

European Patent Office

Office européen des brevets

(11) Publication number: **0 168 404**
**B1**

(12) **EUROPEAN PATENT SPECIFICATION**

(45) Date of publication of patent specification: **11.07.90**

(51) Int. Cl.⁵: **G 02 B 6/38, C 03 C 25/00**

(21) Application number: **84902153.0**

(22) Date of filing: **07.05.84**

(86) International application number:
**PCT/US84/00692**

(87) International publication number:
**WO 85/03360 01.08.85 Gazette 85/17**

(60) Divisional applications 87202272, 87202271, 87202273, 87202270 filed on 20.11.87.

(54) FIBER OPTIC STRUCTURE AND METHOD FOR MAKING.

(30) Priority: **20.01.84 US 572734**

(43) Date of publication of application:
**22.01.86 Bulletin 86/04**

(45) Publication of the grant of the patent:
**11.07.90 Bulletin 90/28**

(84) Designated Contracting States:
**BE CH DE FR GB LI**

(56) References cited:
EP-A-0 021 871     GB-A-1 555 130
EP-A-0 038 023     GB-A-2 034 068
EP-A-0 078 049     GB-A-2 113 837
EP-A-0 095 673     JP-A-5 474 453
EP-A-0 096 511     US-A-4 033 668
EP-A-0 124 415     US-A-4 182 017
WO-A-82/01365      US-A-4 205 898
WO-A-83/03670      US-A-4 287 427
FR-A-2 103 683     US-A-4 386 822

Institute of Electronics and Communication Engineers of Japan International Conference on Integrated Optics and Optical Fiber Communication Technical Digest, 18-20 July 1977, Tokyo (JP) H. Takimoto et al.: "A splicing method with auxiliary fibres", pages 343-346

(73) Proprietor: **Hughes Aircraft Company
7200 Hughes Terrace P.O.Box 45066
Los Angeles California 90045-0066 (US)**

(72) Inventor: **PIKULSKI, Joseph, L.
1800 W. Hillcrest Drive, 247
Newberry Park, CA 91320 (US)**

(74) Representative: **Colgan, Stephen James et al
CARPMAELS & RANSFORD 43 Bloomsbury Square
London WC1A 2RA (GB)**

Courier Press, Leamington Spa, England.

# Description

### Background of the Invention

Optical fiber has electro-deposited thereon a metal body which permits the fiber to be mechanically acted upon by machining, positioning, or handling the metal body.

Attention is drawn to corresponding divisional applications Nos. 87202270.2, 87202271.0, 87202272.8 and 87202273.6.

Fiber optic waveguides are small and fragile. It is important that the waveguides be firmly supported at least at their ends so that they can be ground and polished with facets or other surfaces which are optimum for coupling light into the fiber for coupling the fiber with respect to another optical structure such as another optical fiber, a detector, or an integrated optic waveguide. In the past, epoxy adhesive has been employed for attaching a fiber optic waveguide to a surface for the purpose of building a coupling device for the end of the fiber, including polishing of the fiber end. One of the problems of this attachment is that the dimensional changes in the hardening epoxy adhesive cause external forces on the fiber optic waveguide. These forces cause microbending in the optical fiber resulting in significant signal losses. Microbending, localized changes in the optical fiber's index of refraction, must be minimized in order to maximize the signal and the signal-to-noise ratio. Thus, there is need for a method of forming a structure which can be built up onto an optical fiber to permit handling of the optical fiber and to permit machining and otherwise processing the end of the optical fiber to enhance coupling and the like.

Basic electroplating of metal on an optical fiber is known, such as is mentioned in European patent application, publication No. EP 0096511.

### Summary of the Invention

According to the invention, there is provided a method of depositing a substantially uniform coating on an optical fiber structure comprising the steps of:

providing an initial conductive coating on optical fiber;

providing an electrolyte solution comprising an electroplating solution and UBAC solution No. 1 wherein said UBAC No. 1 solution is present to a concentration of at least about one-half millilitre per litre of electro-plating solution;

placing the optical fiber in the electrolyte solution; and

plating a metallic body around said fiber at a plating current of less than about 180 milliamperes per square inch (279 A/m$^2$) said body having a thermal coefficient of expansion substantially the same as that of the fiber optic material.

The method has the advantage of providing an optical fiber structure having a body of material deposited on the exterior of the fiber which is sufficiently strong and rigid to permit machining and other handling of the fiber. The body of material should have a thermal coefficient of expansion substantially the same as that of the fiber optic material to minimize microbending and consequent microbending losses upon temperature change.

It is a purpose and advantage of this invention to provide a method of depositing a body on the exterior of a fiber optic waveguide in order to permit handling, machining, and connecting of the waveguide to other optical parts.

It is a further purpose and advantage of this invention to provide a metallic body deposited on a fiber optical waveguide in such a manner that the body minimizes microbending losses and permits machining and attachment of the fiber optic for optical interconnection therewith.

Other purposes and advantages of this invention will become apparent from a study of the following portion of the specification, the claims and the attached drawings.

### Brief Description of the Drawings

FIG. 1 is a perspective view of an optical fiber onto which a metallic body will be built up in accordance with the structure and method of this invention.

FIG. 2 is a perspective view of the same optical fiber of FIG. 1, showing a metal body built up thereon.

### Detailed Description of the Invention

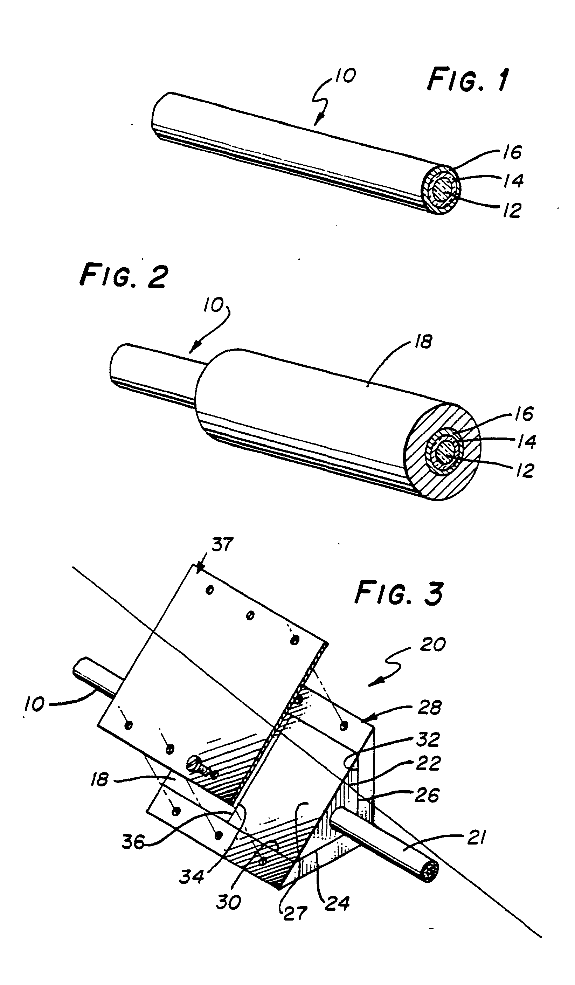

In FIG. 1, optical fiber 10 is the general indication of a typical coated optical fiber. Fiber core 12 is substantially transparent to the optical radiation of interest. If preferably carries an optical cladding 14 and a coating 16. Coating 16 can be either an organic material or an inorganic material such as aluminum. Such optical fibers can be made sufficiently flexible and optically transmissive to achieve the results required of optical fibers.

Referring to FIG. 2, copper body 18 is a built-up structure on coating 16 of fiber 10 when cladding is of an inorganic material such as aluminum. Alternatively, copper body 18 is a built-up structure on optical cladding 14 when coating 16 is of an organic material, coating 16 being removed therefrom prior to beginning of the build-up process.

When the optical cladding 14 is the exterior or material of the fiber, the length on which the body 18 is to be deposited can be made conductive by vapor deposition of silver or gold as a first step. Copper is particularly suited for the built-up structural body because it can be evenly and easily deposited upon the fiber. An even, localized-force-free deposition process eliminates localized forces which can cause microbending and consequent transmission losses. Other metals would be selected for the built-up structural body when found to be suitable for this even, localized-force-free deposition.

Copper body 18 is built up by electroplating. A suitable electroplating bath is prepared as follows: Two hundred twenty-five grams of copper sulphate are dissolved per liter of water. Fifty-five grams of sulfuric acid are also added per liter to provide the plating. A suitable electroplating bath is prepared. Two hundred twenty-five grams of copper sulphate are employed per liter of water. Fifty-five grams of sulfuric acid are also added per liter to provide the copper plating electrolyte. Added to the plating electrolyte solution is one-half milliliter of UBAC solution No. 1 per liter of electrolyte. This material is available from Udylite-Omic, 21441 Hoover Road, Warren, Michigan, 48089. This mixture acts to improve the fineness of the copper grain in the electrolytic build up.

It is critical to the plating that the plating current be a maximum of 180 milliamperes per square inch ($279 A/m^2$). A higher current accelerates the ions in the plating solution and this, in turn, produces random orientation which results in graininess. Currents lower than the maximum current improve the fineness of the copper grain. The preferred current is 90 milliamperes per square inch ($140 A/m^2$). The plating voltage is from 0 to 3 volts, and the electrolyte temperature is maintained at 70 to 80 degrees F (21.1 to 26.7°C). The concentration of UBAC solution No. 1 in the electrolyte is maintained during the plating operation.

The plating operation must be carefully performed to minimize stresses in the copper plate body which would cause microbending. Microbending, localized changes in the optical fiber's index of refracting, is caused by forces applied to fiber 10. Copper body 18 is thereby deposited without substantial effect upon fiber 10. The result is that the copper body 18 produces a transmission loss of less than 0.01 decibels in the fiber. Plating continues until the copper body 18 is built up to the desired size.

The built-up structural body is useful for creating structures of various utility and for use of the fiber 10 in various different applications. Examples of such structures are shown in divisional applications Nos. 87202270.2, 87203371.0, 87202272.8 and 87202273.6.

## Claims

1. A method of depositing a substantially uniform metallic coating on an optical fiber comprising the steps of:—

providing an initial conductive coating on optical fiber;

providing an electrolyte solution comprising an electroplating solution and UBAC solution No. 1 wherein said UBAC No. 1 solution is present to a concentration of at least about one-half millilitre per litre of electro-plating solution;

placing the optical fiber in the electrolyte solution; and

plating a metallic body around said fiber at a plating current of less than about 180 milliamperes per square inch ($279 A/m^2$) said body having a thermal coefficient of expansion substantially the same as that of the fiber optic material.

2. The method of making an optical fiber structure as defined in claim 1, wherein said electroplating solution comprises an aqueous solution of copper sulphate of about 225 grams per litre and sulphuric acid of about fifty-five grams per litre.

3. The method defined in claim 1 or 2 wherein said plating current is about 90 milliamperes per square inch ($140 A/m^2$).

4. The method defined in any one of the preceding claims wherein the plating voltage is in the range of about 0 to 3 volts and the electrolyte temperature is in the range of about 70 to 80°F (21.1 to 26.7°C).

## Patentansprüche

1. Verfahren zum Aufbringen einer im wesentlichen einförmigen metallischen Beschichtung auf einer optischen Faser, welches die Schritte beinhaltet:

Bereitstellen einer leitenden Anfangsschicht auf der optischen Faser;

Bereitstellen einer Elektrolytlösung mit einer Elektroplattierlösung und einer UBAC-Lösung Nr. 1, wobei die UBAC-Lösung Nr. 1 in einer Konzentration von wenigstens einem halben Milliliter pro Liter der Elektroplatierlösung vorhanden ist;

Anordnen der optischen Faser in der Elektrolytlösung; und

Plattieren eines metallischen Körpers um die Faser herum bei einem Plattierstrom von weniger als $279 A/m^2$ (180 Milliampere per square inch), wobei der Körper einen thermischen Expansionskoeffizienten aufweist, der im wesentlichen gleich dem des optischen Fasermaterials ist.

2. Verfahren zum Herstellen einer optischen Faserstruktur nach Anspruch 1, worin die Elektroplattierlösung eine wäßrige Lösung von Kupfersulfat von um 225 Gramm pro Liter und Schwefelsäure von um 55 Gramm pro Liter aufweist.

3. Das Verfahren nach den Ansprüchen 1 oder 2, worin der Plattierstrom um $140 A/m^2$ (90 Milliampere per square inch) ist.

4. Das Verfahren nach einem der vorangegangenen Ansprüche, worin sich die Plattierspannung in dem Bereich zwischen 0 und 3 Volt und die Elektrolyttemperatur sich an dem Bereich zwischen 21,1 und 26,7°C (70 bis 80°F) bewegt.

## Revendications

1. Un procédé pour déposer un revêtement métallique sensiblement uniforme sur une fibre optique, comprenant les étapes suivantes:

mise en place d'un revêtement initial conducteur sur la fibre optique;

préparation d'une solution électrolytique comprenant une solution d'électroplacage et une solution "UBAC n° 1", dans laquelle cette solution "UBAC n° 1" est présente avec une concentration d'au moins environ un demi-millilitre par litre de solution d'électroplacage;

introduction de la fibre optique dans la solution électrolytique; et

placage d'un corps métallique autour de la fibre avec un courant de placage inférieur à environ 180 milliampères par pouce carré (279 A/m²), ce corps ayant un coefficient de dilatation thermique qui soit sensiblement le même que celui du matériau optique de la fibre.

2. Le procédé de réalisation d'une structure de fibre optique tel que défini dans le revendication 1, dans lequel la solution d'électro-placage comprend une solution aqueuse de sulfate de cuivre à environ 225 grammes par litre et d'acide sulfurique à environ cinquante-cinq grammes par litre.

3. Le procédé défini dans la revendication 1 ou 2, dans lequel le courant de placage est d'environ 90 milliampères par pouce carré (140 A/m²).

4. Le procédé défini dans l'un quelconque des revendications précédentes, dans lequel la tension de placage se trouve comprise entre 0 et 3 volts environ, et la température de l'électrolyte entre 70 et 80°F (21,1 à 26,7°C).

FIG. 1

FIG. 2

FIG. 3